# EUROPEAN PATENT SPECIFICATION

(11) **EP 0 561 582 B1**
(45) Date of publication and mention of the grant of the patent: **01.09.1999**
(21) Application number: 93301930.9
(22) Date of filing: 15.03.1993
(51) Int. Cl.: C08L 59/04, C08L 59/00

(54) **Polyacetal resin composition**
Polyacetal Harzzusammensetzung
Composition de résine de polyacétale

(30) Priority: 16.03.1992 JP 5801292
(43) Date of publication of application: 22.09.1993
(73) Proprietor: POLYPLASTICS CO. LTD., Chuo-Ku Osaka-shi Osaka 541 (JP)
(72) Inventor: Katsumata, Toru, Fuji-shi, Shizuoka (JP); Matsunaga, Nobuyuki, Fuji-shi, Shizuoka (JP)
(74) Representative: Jackson, Peter

(56) References cited:
- EP-A- 0 156 285
- EP-A- 0 440 442
- EP-A- 0 484 737
- EP-A- 0 494 534
- DE-A- 2 150 926
- US-A- 5 143 982
- DATABASE WPI, Derwent Publications Ltd., London, GB; DATABASE WPI, accession no. 87-174782, week 8725; & JP - A - 62106954 (TORAY IND. INC.)

## Description

The present invention relates to a polyacetal resin composition having reduced surface glare properties (also referred to herein as suppressed surface gloss or delustered surface state). In particular, the invention provides a polyacetal resin composition comprising a polyacetal resin compounded with a specified polyester and a specified core-shell polymer. Molded articles produced from the compositions of the invention exhibit low-glare surface properties, excellent printability and excellent adhesive properties, while retaining the mechanical properties and moldability provided by polyacetal resins per se.

Because of their excellent physical, mechanical and electrical and excellent chemical properties such as chemical resistance and thermal resistance, polyacetal resins have come to be widely used as engineering resins. However, as their fields of application are increased, further specific properties become required of them. One such further specific property is reduced glare (suppressed surface gloss) from the surface of a molded article produced from the resin composition. For example, articles having a low surface reflection of light are often required for the following purposes: avoiding glare, providing a high quality appearance; and preventing faulty equipment operations resulting from light reflection. Such low-glare requirements are commonly met in the fields of exterior or interior components of automobiles and optical instruments.

Also in the fields of general electric appliances and building materials, there is an increasing need to use a combination of different materials to satisfy a specific duty. However, since polyacetal resins have a higher surface gloss than other resin materials, blending a polyacetal resin with other resin materials imparts a poor appearance to the blended product. Thus the use of polyacetal resin has been limited in fields wherein surface appearance is important.

A method wherein an inorganic filler such as calcium carbonate, talc or calcium silicate is added to the polyacetal resin to satisfy this requirement has been known. In this method, however, a large amount of talc or like filler must be incorporated into the resin in order to obtain the desired effect. As a result, the mechanical properties of the resin, in particular elongation and toughness, are impaired and thus an article molded from the resin is easily broken when stress is applied to it during after-treatment or fabrication or if it is dropped.

In addition, when polyacetal resin used as the material of components for outdoor use, there is an increasing requirement for excellent printability and adhesive properties. However, these properties of the polyacetal are poor, apparently because it is a highly crystalline resin. Thus an improvement of these properties has also been demanded.

Also, EP 440 442 teaches a thermoplastic polymer blend composition comprising
A: a rubber-modified monovinylidene aromatic copolymer or a non-rubber-modified monovinylidene aromatic copolymer,
B: an acetal polymer or copolymer, and
C: a thermoplastic polycarbonate resin or a polyester resin derived from the reaction of dicarboxylic acid and a glycol. In particular, EP 440 442 uses a butadiene rubber modified styrene acrylonitrile copolymer "ABS" used in all its Examples.

The principal object and effect of EP 440 442 is to improve such as creep resistance, impact resistance and tensile strength, and there is no reference to improving the low gloss or glare of the surface of the composition.

Under these circumstances, it has become desirable to develop a polyacetal resin material capable of forming a molded article having excellent properties of mechanical strength, moldability, printability, adhesive properties and low surface glare, while not sacrificing the essential properties of the polyacetal resin. The inventors have found that such a material can be obtained by a combination of a specified polyalkylene terephthalate copolymer and a specified core-shell polymer.

Namely, the present invention relates to a polyacetal resin composition comprising:
(A) 100 parts by weight of a polyacetal resin, compounded with:
(B) 0.1 to 50 parts by weight of a polyalkylene terephthalate copolymer having a melt flow temperature of 210°C or below, wherein the acid component constituting said polyalkylene terephthalate copolymer (B) is terephthalic acid alone or terephthalic acid and at least one member selected from the group consisting of isophthalic acid, naphthalenedicarboxylic acid and adipic acid, and wherein the diol component constituting said polyalkylene terephthalate copolymer (B) is 1,4-butanediol or ethylene glycol or, 1,4-butanediol or ethylene glycol and at least one member selected from the group consisting of ethylene glycol (when 1,4-butanediol is used), diethylene glycol and 1,4-cyclohexanedimethylol,
   and
(C) 0.1 to 50 parts by weight of an acrylic core-shell polymer comprising an alkyl acrylate in which the alkyl group has 2 to 8 carbon atoms, or a mixture of such acrylates, which is polymerized into a rubbery polymer which forms a core, and a shell of a polymer consisting of a vinylic copolymer having an oxygen-containing polar group, wherein the core amount of said acrylic core-shell polymer is from 50 to 90% by weight of such polymer.

If desired, the said polyacetal resin composition may further comprise:
(D) 0.1-10 parts by weight of an isocyanate or isothiocyanate compound or a modified product thereof.

The invention further relates to a molded product of the polyacetal resin composition.

The polyacetal resin (A) to be used in the present invention is a polymeric compound comprising an oxymethylene group (-CH₂O-) as the main constituent unit. This resin (A) may be any of polyoxymethylene homopolymers, copolymers comprising oxymethylene groups and a small amount of other constituent units, terpolymers and block copolymers. The molecule of the polyacetal resin (A) may have not only a linear structure but also a branched or crosslinked structure. The degree of polymerization of this resin (A) is not particularly limited.

The polyalkylene terephthalate copolymer (B) to be used in the present invention is a polyester having a melt flow temperature of 210°C or below, which is suitably prepared by copolycondensing an acid component consisting of 100 - 50 mole % of terephthalic acid and 0 - 50 mole % of another dicarboxylic acid with an alkylenediol component. In the polymerization, these dicarboxylic acid compounds can be used in the form of an ester-forming derivative such as a lower alcohol ester, e.g. dimethyl ester. These other dicarboxylic acid components can be used either singly or in combination of two or more of them. Such other dicarboxylic acid component is selected from isophthalic acid, naphthalenedicarboxylic acid and adipic acid.

The alkylenediol component is 1,4-butanediol or, ethylene glycol. These alkylenediols may be used either singly or in combination, and they may be partially replaced with one or more of ethylene glycol (in case of 1,4-butanediol), diethylene glycol and 1,4-cyclohexanedimethylol.

The polyalkylene terephthalate polymer (B) to be used in the present invention is a copolyester prepared by copolymerizing the above-described acid component with the above-described diol component and having a melt flow temperature of 210°C or below, preferably 190°C or below. When the melt flow temperature is above 210°C, the kneading operation becomes difficult and the obtained composition is not sufficiently effective.

Thus the polyalkylene terephthalate which is usable as the component (B) of the present invention is a copolyester comprising an acid component which is terephthalic acid optionally partially replaced with at least one member selected from the group consisting of isophthalic acid, naphthalenedicarboxylic acid and adipic acid, and a diol component which is 1,4-butanediol, ethylene glycol or a diol partially replaced with one or more of ethylene glycol (in case of 1,4-butanediol), diethylene glycol and 1,4-cyclohexanedimethylol. Particularly preferred is a copolyester prepared by copolymerizing an acid component consisting of 90 to 60 mole % of terephthalic acid and 10 to 40 mole % of isophthalic acid with a diol component consisting of 1,4butanediol and/or ethylene glycol combined with 1,4-cyclohexanedimethylol.

Although the intrinsic viscosity (IV) of the copolyester resin is not particularly limited, it is desirable to determine the intrinsic viscosity of the copolyester so that the melt viscosity of the copolyester at the melt kneading temperature is as close as possible to the melt viscosity of the polyacetal in order to realize an excellent dispersion state. From this viewpoint, the intrinsic viscosity of the copolyester is preferably 0.3 to 1.2, particularly preferably 0.4 to 0.8. The intrinsic viscosity is herein determined by an ordinary method by using a phenol/tetrachloroethane mixture as a solvent at 40°C.

The amount of the polyalkylene terephthalate copolymer (B) used herein is 0.1 - 50 parts by weight, preferably 1 - 50 parts by weight and more preferably 3 - 40 parts by weight, for 100 parts by weight of the polyacetal resin (A). If the amount of component (B) is insufficient, the effect of suppressing the surface glare is not sufficiently exhibited and, on the contrary, if it is present to excess the mechanical properties and thermal stability of the resin are adversely affected and its extrusion becomes difficult.

Although the surface glare of the obtained molded product is reduced when the polyalkylene terephthalate copolymer (B) is incorporated into the polyacetal resin (A), the extrusion becomes difficult and the surface of the molded product becomes non-uniform. By compounding the above-described components (A) and (B) with (C) an acrylic core-shell polymer, the extrudability is improved and the surface glare of the obtained molded product is uniformly lowered while the well-balanced properties of the polyacetal resin are retained.

When the acrylic core-shell polymer (C) having the effect of compatibilizing the components (A) and (B) is incorporated into the components (A) and (B), the extrusion becomes possible, and the polymer (C) *per se* exhibits a delustering effect. In addition, the surface is modified to improve its printability. Although a sufficient compatibilizing effect is exhibited by using an ordinary wholly acrylic core-shell polymer as the acrylic core-shell polymer (C), it is desirable to use an acrylic core-shell polymer having a hydroxyl group in the shell part. When the shell part has an oxygen-containing polar group, the effect of compatibilizing the components (A) and (B) is further improved and a further improved delustering effect *per se* is exhibited, whereby an excellent extrudability is obtained and the produced molded product has a uniformly reduced surface glare and a subdued appearance of a quality article while retaining the excellent mechanical properties of the polyacetal.

The core-shell polymer (C) used herein can be produced by any process. One, non-limiting example of the processes for producing the core-shell polymer is as follows.

The core-shell polymer (C) in the present invention comprises a core consisting of a rubbery polymer and a shell of a polymer consisting of a vinylic copolymer. This core-shell polymer is produced by, for example, a continuous multi-stage emulsion polymerization method wherein a polymer obtained in the preceding stage is successively coated with a polymer in the succeeding stage among seed emulsion polymerization methods.

In the particle-forming polymerization step, it is preferred to feed the monomer, a surfactant and water into a reactor and then add a polymerization initiator to the resultant mixture to initiate the emulsion polymerization reaction.

The polymerization in the first stage is a reaction for forming a rubbery polymer.

The monomers constituting the rubbery polymer are alkyl acrylates in which the alkyl group has 2 to 8 carbon atoms or mixtures of them. These monomers are polymerized into a rubbery polymer.

Examples of the alkyl acrylates in which the alkyl group has 2 to 8 carbon atoms include ethyl acrylate, propyl acrylate, butyl acrylate, cyclohexyl acrylate and 2-ethylhexyl acrylate. Butyl acrylate is particularly preferably used as the rubbery polymer.

The monomers usable in the first-stage polymerization include copolymerizable alkyl acrylates such as aromatic vinyls, e.g. styrene, vinyltoluene and α-methylstyrene; aromatic vinylidenes; vinyl cyanides and vinylidene cyanides, e.g. acrylonitrile and methacrylonitrile; and alkyl methacrylates, e.g. methyl methacrylate and butyl methacrylate.

A polymer having a high impact resistance can be obtained by using a small amount of a crosslinking monomer and a grafting monomer.

The crosslinking monomers include, for example, aromatic divinyl monomers such as divinylbenzene; and alkanepolyol polyacrylates or alkanepolyol polymethacrylates such as ethylene glycol diacrylate, ethylene glycol dimethacrylate, butylene glycol diacrylate, hexanediol diacrylate, hexanediol dimethacrylate, oligoethylene glycol diacrylates, oligoethylene glycol dimethacrylates, trimethylolpropane diacrylate, trimethylolpropane dimethacrylate, trimethylolpropane triacrylate and trimethylolpropane trimethacrylate, among which butylene glycol diacrylate and hexanediol diacrylate are preferably used.

The grafting monomers include, for example, allyl esters of unsaturated carboxylic acids such as allyl acrylate, allyl methacrylate, diallyl maleate, diallyl fumarate and diallyl itaconate, among which allyl methacrylate is particularly preferably used.

The above-described crosslinking monomers and grafting monomers are used each in an amount in the range of 0-5% by weight, preferably 0.1 to 2% by weight, based on the total amount of the monomers in the first stage.

The amount of the core of the rubbery polymer is in the range of 50 to 90% by weight based on the whole core-shell polymer. When the amount of the core is below or above this range, the mechanical properties of a polyacetal resin composition obtained by melt-mixing the resultant core-shell polymer tend to be less satisfactory.

The shell phase consists of a vinylic copolymer, particularly preferably a glassy polymer having a glass transition temperature of 40°C or above.

The monomers constituting the polymer include vinylic polymerizable monomers such as alkyl (meth)acrylates, e.g. methyl (meth)acrylate, ethyl (meth)acrylate and butyl (meth)acrylate; aromatic vinyls and aromatic vinylidenes, e.g. styrene, vinyltoluene and α-methylstyrene; and vinyl cyanides and vlnylidene cyanides, e.g. acrylonitrile and methacrylonitrile, among which methyl methacrylate and styrene-acrylonitrile are preferred.

In the core-shell polymers, the shell phase consists of a vinylic copolymer having an oxygen-containing polar group. When a core-shell polymer wherein the shell phase has no oxygen-containing polar group is used, the delustering effect (glare-suppressing effect) is reduced and the polymer cannot be used in some applications where a high degree of glare suppression is required.

Examples of the oxygen-containing polar groups include a hydroxyl group, a group containing an ether bond (-O-) (such as a glycidyl group), an amido group (-CONH-), an imido group 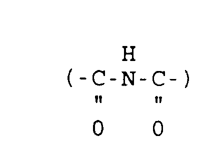 and a nitro group (-NO2) , among which a hydroxyl group and a group containing an ether bond are preferred.

As the monomer constituting the vinylic copolymer having an oxygen-containing polar group, for example, (meth)acrylate of an alcohol having two or more oxygen-containing polar groups in the molecule is used. The term "alcohols having two or more oxygencontaining polar groups in the molecule" refers to alcohols having at least one oxygen-containing polar group other than a hydroxyl group in the alcoholic part. Examples of the (meth)acrylates of alcohols having two or more oxygen-containing polar groups include (meth)acrylates of alcohols having a hydroxyl group and/or a glycidyl group.

The (meth)acrylates of an alcohol having a hydroxy group include, for example, hydroxyethyl (meth)acrylate and hydroxypropyl (meth)acrylate. Hydroxyethyl methacrylate is preferred.

The (meth)acrylates of an alcohol having a glycidyl group include, for example, glycidyl methacrylate and glycidyl acrylate. Glycidyl methacrylate is preferred.

In addition to the above-described (meth)acrylates, vinyl monomers having an oxygen-containing polar group such as allyloxyethanol and allyl glycidyl ether are usable as the constituents of the vinylic copolymer having an oxygen-containing polar group.

An intermediate phase can be formed between the polymer phase formed in the first stage and the polymer phase formed in the final stage. The intermediate phase is formed by seed emulsion polymerization of a functional polymerizable monomer such as glycidyl methacrylate, methacrylic acid or hydroxyethyl methacrylate, a polymerizable monomer capable of forming a glassy polymer such as methyl methacrylate, or a polymerizable monomer capable of forming a rubbery polymer such as butyl acrylate.

The intermediate phase can be suitably selected depending on the desired properties of the core-shell polymer.

The structure of the core-shell polymer having such an intermediate phase is, for example, a multilayer structure in which a phase is present between the core and the shell or a salami structure in which the intermediate phase in the form of fine particles is dispersed in the core. In an extreme case, the intermediate phase to be dispersed forms a new core at the center of the above-described core in the core-shell polymer having a salami structure. The core-shell polymer having such a structure may be formed when a monomer typified by styrene is used as the intermediate phase-constituting monomer.

When the core-shell polymer having an intermediate phase is used, it is often possible to improve the impact resistance, to improve the Young's modulus in flexure, to elevate the heat distortion temperature, and to improve the appearance (inhibition of peeling of the surface, suppression of pearly luster and change in color tone caused by change in refractive index).

The emulsion polymerization in the present invention is conducted by using a surfactant such as a non-ionic oligomeric anionic or oligomeric non-ionic surfactant and a polymerization initiator such as an azo or peroxide polymerization initiator.

The non-ionic surfactants usable in the present invention include most of widely used ordinary non-ionic surfactants such as ethers, e.g. polyoxyethylene nonylphenyl ether, polyoxyethylene stearyl ether and polyoxyethylene lauryl ether; esters, e.g. polyoxyethylene monostearate; sorbitan esters such as polyoxyethylene sorbitan monolaurate; and block polymers, e.g. polyoxyethylene polyoxypropylene block copolymer.

The oligomeric anionic or oligomeric non-ionic surfactants usable in the present invention are oligomeric surfactants heretofore used for the emulsion polymerization for specific purposes, examples of which include the following oligomeric surfactants: 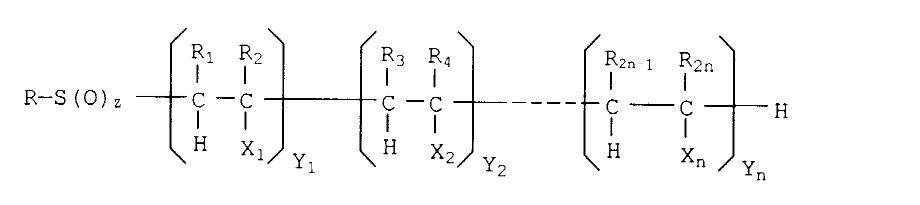 wherein R represents an alkyl group having 5 to 20 carbon atoms, preferably 6 to 12 carbon atoms, n represents an integer of at least 2, z represents 0, 1 or 2, preferably 0 or 1, and particularly preferably 0, R₂ₙ₋₁'s each represent --H, -CH₃, -C₂H₅ or -COOH, R₂ₙ's each represent -H, -CH₃, -C₂H₅, COOH or CH₂COOH, and Xₙ represents -OC₂H₅, -CH₂OH, 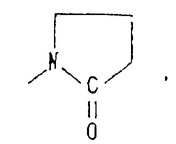 -COOC₂H₄OH, - COOC₃H₆OH, -CONHCH₂OH, -CONHCH₃, -CONHC₂H₅, -CONHC₃H₇, -COOCH₃, -COOC₂H₅, -CN, - OCOCH₃, - OCOC₂H₅ or

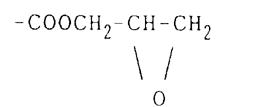

The oligomeric surfactants usable in the present invention have a molecular weight of about 200 to 5,000, preferably about 1,500 to 3,000, and a degree of polymerization 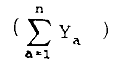 of about 6 to 50.

The oligomeric surfactants are already water soluble or otherwise are converted into water-soluble salts by reaction with an oxide, hydroxide or alcohol.

The water-soluble salts include, for example, alkali metal salts, alkaline earth metal salts, Group III heavy metal salts, ammonium salts and substituted ammonium salts, among which ammonium salts are particularly preferred.

The oligomeric surfactants are produced by, for example, addition polymerization of a suitable monomer in the presence of an alkyl mercaptan in a water-free solvent followed by, if necessary, the oxidation of the resultant product with hydrogen peroxide or ozone to form a corresponding sulphoxide or sulphone as described in Japanese Patent Publication-B No. 34832/1972.

The alkyl mercaptans include, for example, n-octyl mercaptan, n-dodecyl mercaptan, t-dodecyl mercaptan and n-decyl mercaptan.

The above-described monomers include α,β-ethylenically unsaturated monomers having one or more polar groups in the molecule such as (meth)acrylic acid, α-ethylacrylic acid, β-methylacrylic acid, α,β-dimethylacrylic acid, caproic acid, itaconic acid, fumaric acid, maleic acid, (meth)acrylamide, vinyl ethyl ether, vinyl methyl ether, allyl alcohol, vinylpyrrolidone, (meth)acrylonitrile, ethylacrylonitrile, methyl (meth)acrylate, ethyl acrylate, hydroxyethyl (meth)acrylate, hydroxypropyl (meth)acrylate, vinyl acetate, vinyl propionate, N-isopropylacrylamide, N-ethylacrylamide, N-methylacrylamide, glycidyl (meth)acrylate and N-methylolacrylamide.

The solvent usable in the addition polymerization is preferably a lower alkanol such as methanol, ethanol or isopropanol.

The addition polymerization is conducted usually at a temperature in the range of about 20 to 100°C.

In the present invention, the amount of the surfactant is suitably determined depending on the particle-stabilizing faculty of the surfactant.

The polymerization initiators include azo polymerization initiators such as azobisisobutyronitrile, dimethyl 2,2'-azobisisobutyrate and 2,2'-azobis (2-amidinopropane) dihydrochloride and peroxide polymerization initiators such as cumene hydroperoxide, diisopropylbenzene hydroperoxide and hydrogen peroxide, which are used either singly or in combination of two or more of them.

By conducting the emulsion polymerization in the reaction system containing the above-described non-ionic and/or oligomeric surfactant and azo and/or peroxide polymerization initiator, a core-shell polymer substantially free from sulphur oxide compounds (such as sulphates, sulphuric ester salts, persulphates, sulphites and sulphonates) or containing only a very small amount of these sulphur oxide compounds can be obtained.

The amount of the core-shell polymer (C) used herein is 0.1 - 50 parts by weight, preferably 1-30 parts by weight, for 100 parts by weight of the polyacetal resin.

When the amount of the component (C) is insufficient, the extrudability and uniformity of the gloss are insufficient and, on the contrary, when it is excess, the kneading operation becomes troublesome.

The surface glossiness of the molded product produced from the composition of the present invention is practically preferably 20% or below, particularly preferably 15% or below, as determined by a method which will be described below. As the required quality of the interior furnishings of automobiles has recently increased, most interior parts are embossed to obtain a satin-embossed finish or leather grain in order to improve the touch. Thus necessity of the delustering of the mirror surface and a high printability on the embossed surface is increasing. When the composition of the present invention is used, the mirror surface can be remarkably delustered, the printability on the embossed surface is extremely improved and the luster of the embossed surface can be more remarkably reduced by modifying the polyacetal resin surface.

Although the composition of the present invention has sufficient properties and a considerable effect of delustering the surface of the molded product is obtained even when the composition per se is used, when an isocyanate or isothiocyanate compound or a modified product thereof (D) is additionally compounded with the above-described components (A)-(C), the surface of the obtained molded product has a far lower glare, a subdued appearance of a quality article and further improved printability. In addition, the well-balanced properties inherent in the resultant polyacetal resin are retained.

Preferred isocyanate or isothiocyanate compounds or modified products thereof (D) usable in the present invention are compounds represented by the general formula: O=C=N-R-N=C=O or S=C=N-R-N=C=S (R being a divalent group) and modified products of them.

Examples of the compounds (D) usable herein include 4,4'-methylenebis(phenyl isocyanate), 2,4-tolylene diisocyanate, 2,6-tolylene diisocyanate, xylene diisocyanate, 1,6-hexamethylene diisocyanate, isophorone diisocyanate, 1,5-naphthalene diisocyanate and diisothiocyanates corresponding to them, as well as dimers and trimers of them and those in which the isocyanate group (-NCO) is protected in some manner. From the viewpoints of the properties such as degree of discoloration during the melt processing and safety during the handling, particularly preferred are 4,4'-methylenebis(phenyl isocyanate), isophorone diisocyanate, 1,5-naphthalene diisocyanate, 1,6-hexamethylene diisocyanate, 2,4-tolylene diisocyanate and 2,6-tolylene diisocyanate as well as modified products (or derivatives) such as dimers and trimers thereof.

By conducting the melt kneading in the presence of the isocyanate or isothiocyanate compound (D), a uniform, subdued, delustered surface state is brought about, the strength and rigidity are increased and the printability and adhesive property are further improved.

In view of the increase in viscosity, it is inferred that such effects are obtained by the following mechanism: the component (D) is reacted with tho polyacetal resin (A) and/or the polyalkylene terephthalate resin (B) in the melting step to form partially three-dimensional structure in some cases, the affinity of the components (A) and (B) for each other is increased or the interfacial adhesion is improved and the compatibility of the component (C) is made good.

The amount of the isocyanate or isothiocyanate compound or modified product thereof (D) to be used herein is 0-10 parts by weight, preferably 0.1-5 parts by weight, for 100 parts by weight of the polyacetal resin.

It is desirable to assure the stability of the composition of the present invention by adding well-known stabilizers thereto. Particularly important stabilizers usable herein are antioxidants, heat stabilizers (decomposition inhibitors), weather (light) stabilizers, etc.

The antioxidants usually used are sterically hindered phenols or amines, etc. The heat stabilizers usually used are metal hydroxides, inorganic salts, metal salts of fatty acids, and nitrogen-containing compounds such as amidine compounds and amide compounds. The weather (light) stabilizers usually used are benzotriazole substances, benzophenone substances, aromatic benzoate substances and hindered amine substances (piperidine derivatives having a sterically hindered group).

Various dyes and pigments such as carbon black can be suitably added to the composition of the present invention to color it to a desired color.

The composition of the present invention may contain one or more well-known additives such as lubricants, nucleating agents, releasing agents, antistatic agents, surfactants other than those described above, organic polymeric materials other than the components (B) and (C), and inorganic and organic reinforcing agents.

The composition of the present invention can be produced by a well-known process on a well-known apparatus for the production of ordinary synthetic resin compositions. Namely, the composition can be produced by mixing the necessary components together, kneading and extruding the resultant mixture through a single-screw or double-screw extruder to obtain pellets to be molded, and molding the pellets. It is also possible to conduct the production of the composition and the molding simultaneously on a molding machine. Processes preferred for improving the effect of the present invention include a process which comprises pulverizing a part or the whole of the resin components in order to facilitate the dispersion and mixing, then mixing the components together and melt-extruding the resultant mixture to form pellets, and a process which comprises previously melt-kneading a part of the constituents of the composition [for example, component (A) and a part of the component (B) and/or component (C)] to obtain a masterbatch and further kneading the masterbatch with the rest of the components to obtain the desired composition or molded product.

The stabilizers, additives, etc., can be added in any step. It is also possible to add and mix them immediately before obtaining the final molded product.

The resin composition of the present invention can be molded by any of extrusion molding, injection molding, compression molding, vacuum molding, blow molding and expansion molding processes.

It will be apparent from the above description that the composition of the present invention comprising a polyacetal resin compounded with a specified polyalkylene terephthalate copolymer and a specified core-shell polymer exhibits remarkable effects. Namely, it has excellent extrudability and moldability and is capable of forming a molded product having a remarkably delustered surface with a subdued appearance while retaining the well-balanced mechanical properties of the polyacetal.

Thus the polyacetal resin composition of the present invention having a low glossiness is eminently usable as the material of components for which a high quality appearance is required and which should not cause reflection of light. Examples of such components are interior furnishing components of automobiles, such as regulator handles, interior clips, ventilator knobs, etc., outer handles of automobiles, key tops of keyboards, furniture such as deck chairs, shutter materials for floppy disks of which good printability is required, optical instruments, housings and household articles.

### Examples

The following non-limiting Examples further illustrate the present invention. In the Examples and Comparative Examples, parts are given by weight and the characteristic values indicating the surface state and mechanical properties were determined as described below.
(1) Extrusion processability (in the preparation of pellets of the composition):
The extrusion was conducted on a double-screw extruder provided with a vent and having an inner diameter of 30 mm, and the extrusion state was observed. The extrudability thus evaluated was classified into ranks 1-3 described below. The smaller the numeral of the rank, the better the extrudability.
1: Extrusion could be easily conducted by an ordinary method.
2: Extrusion was difficult and the strand was easily broken.
3: Extrusion was impossible.

(2) Examination of surface state and surface glossiness:
The surface state and surface glossiness of test pieces (70 mm x 40 mm x 3 mm thickness) prepared by molding in a mold having mirror surface and embossing function under the conditions described below were examined.
(a) The surface state was classified into ranks 1-4 to evaluate the delustered state and uniformity of the surface of the molded product. The smaller the numeral, the better the uniformity and the delustered state.
1: The surface was uniform and the delustered state was good.
2: Although the surface was delustered, the roughness of the surface was uneven and heavy.
3: Delustered parts of the surface and non-delustered parts of the surface formed an uneven mottled pattern.
4: The surface was scarcely delustered, or the mottled pattern on the surface was large and the non-delustered parts are large.

(b) The surface glossiness in 45° - 45° reflection was determined with a digital variableangle glossmeter (UGV-40 manufactured by Suga Test Instruments Co., Ltd.) according to the glossiness measuring method of JIS K 7105.
∗ Molding machine: IS 80 manufactured by Toshiba Corporation,
∗ Molding conditions:

| | Nozzle | C1 | C2 | C3 |
|---|---|---|---|---|
| Cylinder temp. (°C) | 200 | 190 | 180 | 160 |
| Injection pressure | 650 kg/cm² [63.8 MPa] | | | |
| Injection rate | 1.0 (m/min) | | | |
| Mold temp. | 80 (°C) | | | |

(3) Tensile test and bending test:
The tensile strength and elongation and bending strength were determined according to ASTM D 638.
(4) Cross-cut adhesion test:
The cross-cut adhesion test is one conducted for evaluating the printability in the present invention and comprises the test of the strength of adhesion between a printing ink and the sample.
- Sample:: The test pieces (70 mm x 40 mm x 3 mm thickness) prepared in the above item (2) were used.
- Printing method:: The sample surface was pad-printed with TDST-14 (modified urethane ink; a product of Urban Process, Ltd.). The sample was heated at 130°C for 30 min, cooled to room temperature and subjected to the crosscut adhesion test.
- Cross-cut adhesion test:: Eleven parallel lines were drawn at intervals of 1 mm and also eleven parallel lines crossing the former lines at right angles were drawn at intervals of also 1 mm with a knife on a printing ink applied to the sample to make 100 squares per square centimeter. A cellophane tape was applied to the squares and then peeled off to count the number of the squares from which the printing ink was peeled off. The smaller the number of the squares from which the printing ink was peeled off, the higher the bond strength and the more excellent the printability and adhesive property. The number of the remaining squares in the 100 squares are given in Tables 2 and 3.

(5) Melt flow temperature:
The pellets were fed into a flow tester (manufactured by Shimadzu Corporation) having a nozzle having a diameter of 1 mm. A load of 500 kg was applied thereto and the temperature was elevated to determine the temperature at which the flowing began.

The abbreviations used in the production of the core-shell polymer in the Examples and Comparative Examples were as follows:

| | |
|---|---|
| ethyl acrylate | EA |
| methyl methacrylate | MMA |
| butyl acrylate | BA |
| 1,4-butylene glycol acrylate | BGA |
| allyl methacrylate | ALMA |
| methacrylamide | MAM |
| non-ionic surfactant (Emulgen 950™ | E 950 |
| Oligomeric anionic surfactant de-ionised water | surfactant A DIW |
| 2,2'-azobis (2-amidinopropane) -dihydrochloride (V 50; a product of Wako Pure Chemical Industries, Ltd.) | V 50 |
| 2-hydroxyethyl methacrylate | HEMA |
| styrene | ST |
| glycidyl methacrylate | GMA |

Emulgen 950 is a Trade Mark and product of Kao Corporation)
The surfactant A was synthesised according to Example 13 of Japanese Patent Publication-A No. 10682/1978, pH adjusted to 7.5 with aqueous ammonia and diluted with pure water to a solid content of 10%.

### <Chemical Formula>

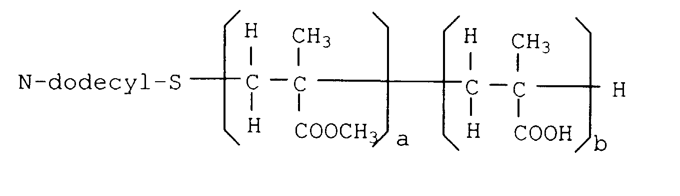

wherein a:b = 7:3, and a+b = about 13.6.

### <Starting Composition for Surfactant A>

| | |
|---|---|
| methacrylic acid | 155 g |
| MMA | 360 g |
| n-dodecylmercaptan | 109 g |
| azobisisobutyronitrile | 4.4 g |
| isopropanol | 314 g |
| molecular weight: | 1310. |

### PRODUCTION EXAMPLES 1 TO 3 <production of core-shell polymers C-1 to C-3>

1200 g of DIW, 1.68 g of 25% aqueous ammonia, 7 g of surfactant A and 0.14 g of MAM were fed into a 5-c polymerization vessel provided with a reflux condenser and the temperature was elevated to 70°C under stirring in a nitrogen stream. 27.86 g of a seed monomer mixture having a composition described below was added to the resultant mixture and dispersion was conducted for 10 min. 21 g. of a 10% aqueous solution of V 50 was added to the resultant dispersion to polymerize the seed particles.

| Seed monomer: | |
|---|---|
| EA | 27.664 g |
| ALMA | 0.14 g |
| BGA | 0.056 g |

Then 7 g of MAM was added to the reaction product. A monomer emulsion prepared by adding 210 g of surfactant A, 900 g of DIW and 2.80 g of 25% ammonium hydroxide to 1365 g of a monomer mixture for forming the core part which comprised a composition described below, and a mixed solution of 21.0 g of a 10% aqueous solution of V 50 and 0.63 g of 1% aqueous ammonia were continuously fed for a period of 180 min to conduct seed polymerization.

| Monomer mixture for forming core part: | |
|---|---|
| BA | 1215.2 g |
| MMA | 140.0 g |
| BGA | 2.8 g |
| AlMA | 7.0 g |

The temperature was elevated to 80°C to age the reaction mixture for 1 h and then lowered to 70°C.

Then 9 g of 10% aqueous solution of V 50 and 0.27 g of 1% aqueous ammonia were added to the mixture. A monomer emulsion for forming the shell part which had a composition described below, 12 g of a 10% aqueous solution of V 50 and 0.36 g of 1% aqueous ammonia were continuously fed into the mixture to conduct seed polymerization.

| Monomer emulsion for forming shell part: | |
|---|---|
| MMA | 265.8 g |
| EA | 60.0 g |
| surfactant A | 30.0 g |
| DIW | 500.0 g |
| 25% aqueous ammonium | 0.72 g |
| St | 180.0 g |
| HEMA | 90.0 g |
| BGA | 1.2 g |
| MAM | 3.0 g |

The temperature was elevated to 80°C to age the reaction mixture, which was then cooled and filtered through a 300-mesh stainless steel gauze to obtain a core-shell polymer latex.
The latex was frozen at -15°C, filtered through a glass filter and air-dried at 60°C for a whole day and night to obtain core-shell polymer C-1.
The polymerization was conducted in substantially the same manner as that of Production Example 1 except that a monomer composition given in Table 1 was used to obtain core-shell polymers C-2 and C-3.

**Table 1**

| | Monomer compn. (pt. by wt.) | core-shell polymer (symbol) | |
|---|---|---|---|
| | | C-2 | C-3 |
| Core part | BA | 1243.2 | 1215.0 |
| | MMA | 140.0 | 140.0 |
| | BGA | 2.8 | 3.0 |
| | AlMA | 14.0 | 7.0 |
| Shell part | MMA | 448.8 | 357.6 |
| | EA | 60.0 | 60.0 |
| | GMA | - | - |
| | HEMA | 90.0 | - |
| | BGA | 1.2 | 2.4 |
| | ST | - | 180 |

35 g of the monomer mixture for forming the core part was used as the seed monomer.

### Examples 1 to 13

Polyacetal resin (A) was compounded with a polyalkylene terephthalate (B) and a core-shell polymer (C) listed in Table 2, and they were mixed on a Henschel mixer and then melt-kneaded on a 30-mm double-screw extruder to obtain a pellet-shaped composition. Then the pellets were molded into test pieces on an injection molding machine under the above-described molding conditions to evaluate the gloss and other properties of the test pieces. The results are given in Table 2.

### Examples 12 and 13

A composition was prepared in the same manner as that of Example 1 except that an isocyanate compound listed in Table 2 was further added to the above-described components. The results of the evaluation are given in Table 2.

### Comparative Examples 1 to 13

A composition was prepared in the same manner as that of Example 1 except that the polyacetal resin (A) was used alone or together with one of polyalkylene terephthalate (B), and core-shell polymer (C). The results of the evaluation are given in Table 3.

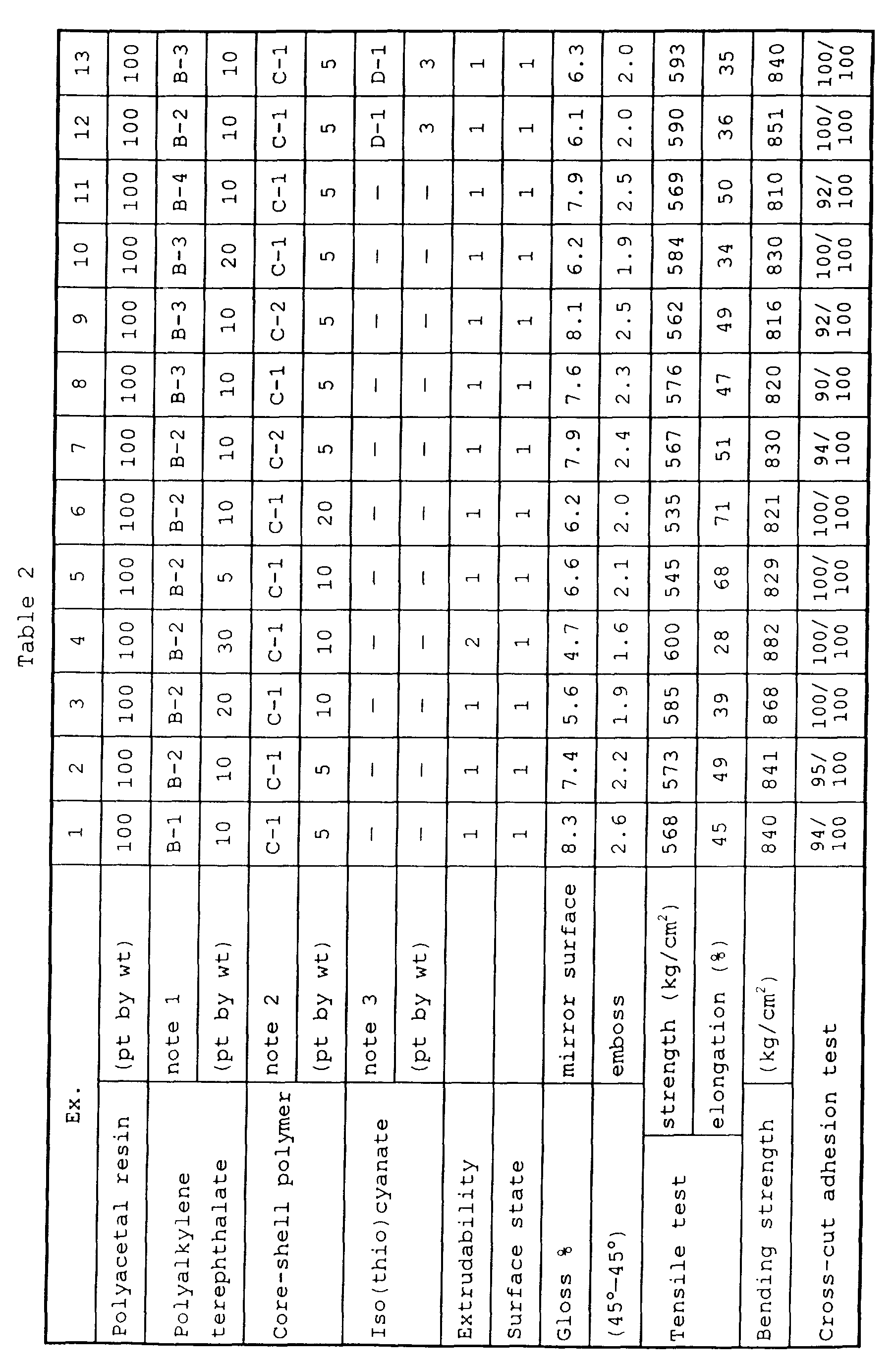

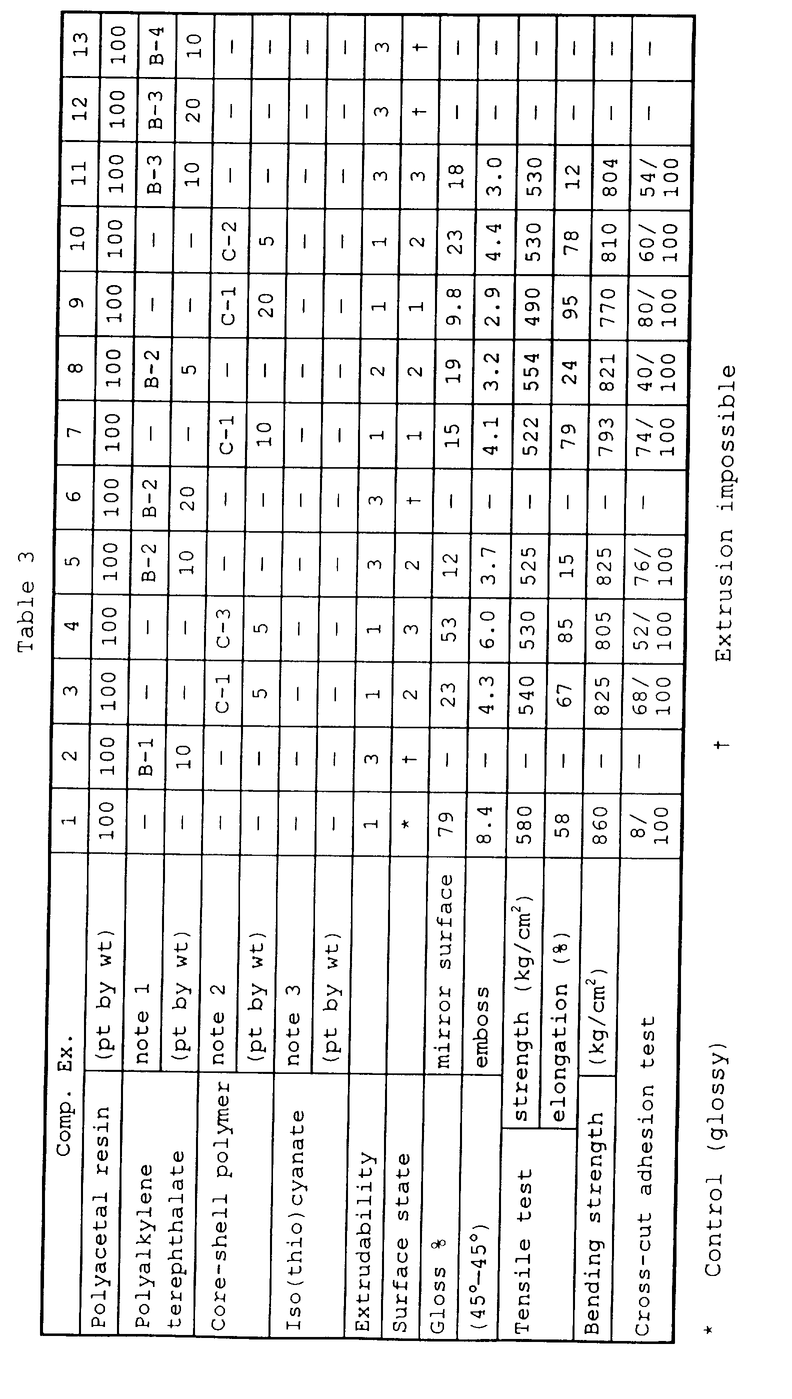

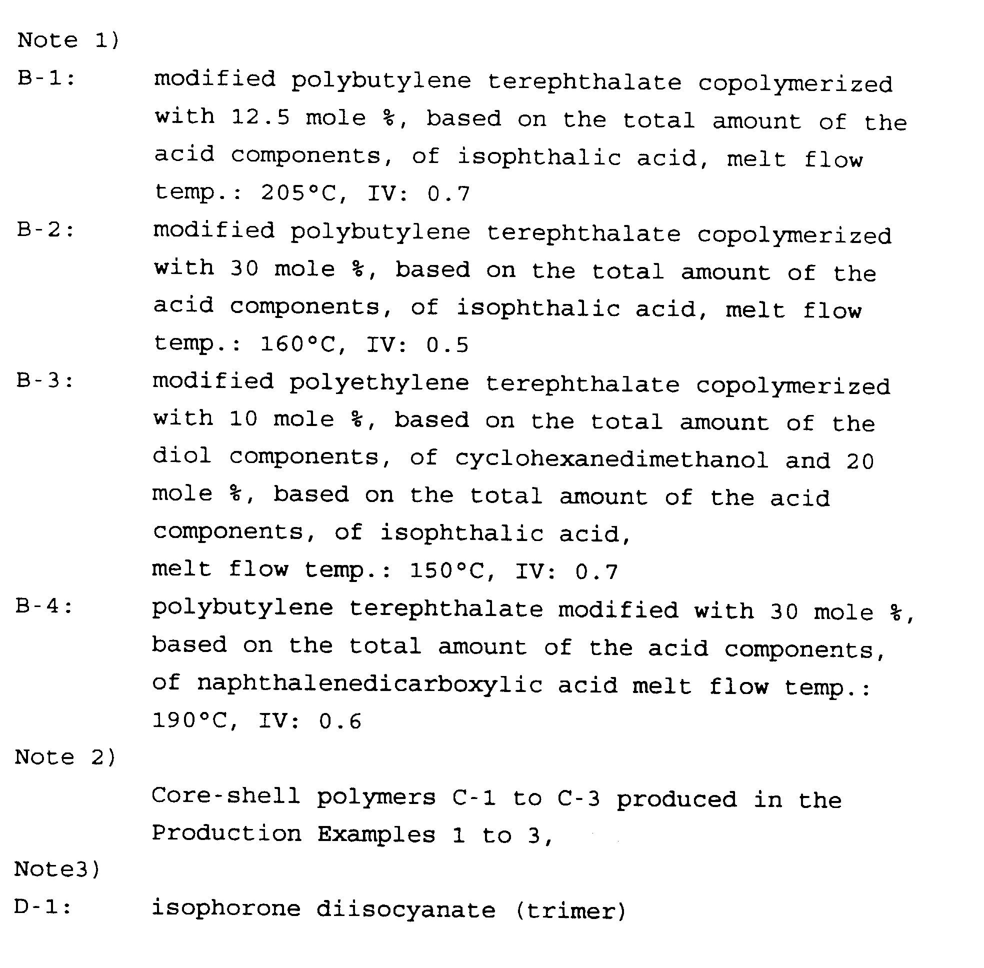

## Claims

1. A polyacetal resin composition comprising:
(A) 100 parts by weight of a polyacetal resin, compounded with:
(B) 0.1 to 50 parts by weight of a polyalkylene terephthalate copolymer having a melt flow temperature of 210°C or below, wherein the acid component constituting said polyalkylene terephthalate copolymer (B) is terephthalic acid alone or terephthalic acid and at least one member selected from the group consisting of isophthalic acid, naphthalenedicarboxylic acid and adipic acid, and
wherein the diol component constituting said polyalkylene terephthalate copolymer (B) is 1,4-butanediol or ethylene glycol or, 1,4-butanediol or ethylene glycol and at least one member selected from the group consisting of ethylene glycol (when 1,4-butanediol is used), diethylene glycol and 1,4-cyclohexanedimethylol,
and
(C) 0.1 to 50 parts by weight of an acrylic core-shell polymer comprising an alkyl acrylate in which the alkyl group has 2 to 8 carbon atoms, or a mixture of such acrylates, which is polymerized into a rubbery polymer which forms a core, and a shell of a polymer consisting of a vinylic copolymer having an oxygen-containing polar group, wherein the core amount of said acrylic core-shell polymer is from 50 to 90% by weight of such polymer.

2. A polyacetal resin composition according to Claim 1, wherein said polyalkylene terephthalate copolymer (B) is a copolyester prepared by copolymerizing an acid component consisting of 90-60% mole % of terephthalic acid and 10-40 mole % of isophthalic acid with a diol component consisting of a mixture of 1,4-butanediol and/or ethylene glycol with 1,4-cyclohexanedimethylol.

3. A polyacetal resin composition according to Claim 1 or 2, wherein the vinylic copolymer having an oxygen-containing polar group constituting the shell part of the core-shell polymer (C) contains, as one constituent, a (meth)acrylate of an alcohol having two or more oxygen-containing polar groups in the molecule.

4. A polyacetal resin composition according to Claim 3, wherein the oxygen-containing polar group of the shell part of the core-shell polymer (C) is a hydroxyl group and/or a glycidyl group.

5. A polyacetal resin composition according to Claim 3, wherein the (meth) acrylate of the shell part of the core-shell polymer (C) is a hydroxymethacrylate or a glycidyl methacrylate.

6. A polyacetal resin composition according to any preceding claim, wherein the core-shell polymer (C) is one prepared by an emulsion polymerisation process using a non-ionic surfactant or oligomeric surfactant.

7. A polyacetal resin composition according to any preceding claim, which further comprises:
(D) 0.1-10 parts by weight of an isocyanate or isothiocyanate compound or a modified product thereof.

8. A polyacetal resin composition according to Claim 7, wherein the isocyanate or isothiocyanate compound or modified product thereof (D) is a diisocyanate compound, a diisothiocyanate compounds, a dimer thereof or a trimer thereof.

9. A low-glare molded product of a polyacetal resin composition according to any preceding claim.

## Patentansprüche

1. Polyacetal-Harzzusammensetzung, umfassend:
(A) 100 Gewichtsteile eines Polyacetal-Harzes, das kompoundiert ist mit:
(B) 0,1 bis 50 Gewichtsteilen eines Polyalkylenterephthalat-Copolymers, das eine Schmelzflußtemperatur von 210 °C oder weniger aufweist, worin die Säurekomponente, die ein Bestandteil des Polyalkylenterephthalat-Copolymers (B) ist, Terephthalsäure allein oder Terephthalsäure und wenigstens ein Element ist, das aus der Gruppe ausgewählt ist, die aus Isophthalsäure, Naphthalindicarbonsäure und Adipinsäure besteht, und
worin die Diolkomponente, die ein Bestandteil des Polyalkylenterephthalat-Copolymers (B) ist, 1,4-Butandiol oder Ethylenglycol, oder 1,4-Butandiol oder Ethylenglycol und wenigstens ein aus der Gruppe ausgewähltes Element ist, das aus Ethylenglycol (wenn 1,4-Butandiol verwendet wird), Diethylenglycol und 1,4-Cyclohexandimethylol besteht, und
(C) 0,1 bis 50 Gewichtsteile eines acrylischen Kern-Hülle-Polymers, umfassend ein Alkylacrylat, in dem die Alkylgruppe 2 bis 8 Kohlenstoffatome aufweist, oder eine Mischung derartiger Acrylate, die zu einem kautschukartigen Polymer polymerisiert wird, welches einen Kern bildet, und eine Hülle eines Poiymers, das aus einem Vinylcopolymer mit einer sauerstoffenthaltenden, polaren Gruppe besteht, worin die Kernmenge des acrylischen Kern-Hülle-Polymers 50 bis 90 Gew.-% eines derartigen Polymers ausmacht.

2. Polyacetal-Harzzusammensetzung gemäß Anspruch 1, worin das Polyalkylenterephthalat-Copolymer (B) ein Copolyester ist, der durch Copolymerisation einer Säurekomponente, die aus 90 bis 60 Mol-% Terephthalsäure und 10 bis 40 Mol-% Isophthalsäure besteht, mit einer Diolkomponente, die aus einer Mischung von 1,4-Butandiol und/oder Ethylenglycol mit 1,4-Cyclohexandimethylol besteht, hergestellt wurde.

3. Polyacetal-Harzzusammensetzung gemäß Anspruch 1 oder 2, worin das Vinyl-Copolymer, das eine sauerstoffenthaltende, polare Gruppe aufweist, welches den Hüllenteil des Hülle-Kern-Polymers (C) ausmacht, als einen Bestandteil ein (Meth)acrylat eines Alkohols mit zwei oder mehr sauerstoffenthaltenden, polaren Gruppen in dem Molekül enthält.

4. Polyacetal-Harzzusammensetzung gemäß Anspruch 3, worin die sauerstoffenthaltende, polare Gruppe des Hüllenteils des Hülle-Kern-Polymers (C) eine Hydroxyl- und/oder eine Glycidylgruppe ist.

5. Polyacetal-Harzzusammensetzung gemäß Anspruch 3, worin das (Meth)acrylat des Hüllenteils des Hülle-Kern-Polymers (C) ein Hydroxymethacrylat oder ein Glycidylmethacrylat ist.

6. Polyacetal-Harzzusammensetzung gemäß irgendeinem der vorhergehenden Ansprüche, worin das Hülle-Kern-Polymer (C) eines ist, das durch ein Emulsionspolymerisationsverfahren unter Verwendung eines nichtionischen Tensids oder eines oligomeren Tensids hergestellt wurde.

7. Polyacetal-Harzzusammensetzung gemäß irgendeinem der vorhergehenden Ansprüche, welche ferner:
(D) 0,1 bis 10 Gewichtsteile einer Isocyanat- oder Isothiocyanat-Verbindung oder eines modifizierten Produkts derselben
umfaßt.

8. Polyacetal-Harzzusammensetzung gemäß Anspruch 7, worin die Isocyanat- oder Isothiocyanat-Verbindung oder das modifizierte Produkt derselben (D) eine Diisocyanat-Verbindung, eine Diisothiocyanat-Verbindung, ein Dimer oder ein Trimer derselben ist.

9. Aus einer Polyacetal-Harzzusammensetzung gemäß irgendeinem der vorhergehenden Ansprüche geformtes Produkt mit geringem Glanz.

## Revendications

1. Une composition de résine polyacétal comprenant :
(A) 100 parties en poids d'une résine polyacétal, mélangée avec :
(B) 0,1 à 50 parties en poids d'un copolymère polytéréphtalate d'alkylène ayant une température de fusion de 210°C ou moins, dans lequel le composant acide constituant ledit copolymère polytéréphtalate d'alkylène (B) est l'acide téréphtalique seul ou l'acide téréphtalique avec au moins un membre du groupe formé par l'acide isophtalique, un acide naphtalènedicarboxylique et l'acide adipique, et dans lequel le composant diol constituant ledit copolymère polytéréphtalate d'alkylène (B) est le 1,4-butanediol ou l'éthylène-glycol, ou le 1,4-butanediol ou l'éthylène-glycol et au moins un membre du groupe formé par l'éthylène-glycol (lorsqu'on utilise le 1,4-butanediol), le diéthylène-glycol et le 1,4-cyclohexanediméthylol, et
(C) 0,1 à 50 parties en poids d'un polymère acrylique à noyau-enveloppe comprenant un acrylate d'alkyle dans lequel le groupe alkyle compte 2 à 8 atomes de carbone, ou un mélange de tels acrylates, qui est polymérisé en un polymère caoutchouteux qui forme un noyau, et une enveloppe d'un polymère consistant en un copolymère vinylique ayant un groupe polaire oxygéné, dans lequel la quantité de noyau dudit polymère acrylique à noyau-enveloppe est de 50 à 90 % en poids de ce polymère.

2. Une composition de résine polyacétal selon la revendication 1, dans laquelle ledit copolymère polytéréphtalate d'alkylène (B) est un copolyester préparé en copolymérisant un composant acide consistant en 90 à 60 mol % d'acide téréphtalique et 10 à 40 mol % d'acide isophtalique avec un composant diol consistant en un mélange de 1,4-butanediol et/ou d'éthylène-glycol avec le 1,4-cyclohexanediméthylol.

3. Une composition de résine polyacétal selon la revendication 1 ou 2, dans laquelle le copolymère vinylique ayant un groupe polaire oxygéné constituant l'enveloppe du polymère à noyau-enveloppe (C) contient, comme un constituant, un (méth)acrylate d'un alcool dont la molécule contient deux ou plusieurs groupes polaires oxygénés.

4. Une composition de résine polyacétal selon la revendication 3, dans laquelle le groupe polaire oxygéné de l'enveloppe du polymère à noyau-enveloppe (C) est un groupe hydroxyle et/ou un groupe glycidyle.

5. Une composition de résine polyacétal selon la revendication 3, dans laquelle le (méth)acrylate de l'enveloppe du polymère à noyau-enveloppe (C) est un hydroxyméthacrylate ou un méthacrylate de glycidyle.

6. Une composition de résine polyacétal selon l'une quelconque des revendications précédentes, dans laquelle le polymère à noyau-enveloppe (C) est un polymère préparé par un procédé de polymérisation en émulsion utilisant un agent tensio-actif non ionique ou un agent tensio-actif oligomère.

7. Une composition de résine polyacétal selon l'une quelconque des revendications précédentes, qui comprend de plus :
(D) 0,1 à 10 parties en poids d'un isocyanate ou isothiocyanate ou un de leurs produits de modification.

8. Une composition de résine polyacétal selon la revendication 7, dans laquelle l'isocyanate ou l'isothiocyanate ou son produit de modification (D) est un diisocyanate, un diisothiocyanate, un de leurs dimères ou un de leurs trimères.

9. Un produit moulé à faible brillant d'une composition de résine polyacétal selon l'une quelconque des revendications précédentes.
